# EUROPEAN PATENT APPLICATION

(11) **EP 4 668 672 A1**
(43) Date of publication of application: **24.12.2025**
(21) Application number: 24465539.5
(22) Date of filing: 21.06.2024
(51) Int. Cl.: H04L 9/32, H04L 9/00, H04L 9/40

(54) **TRUST VERIFICATION BETWEEN PARTICIPANTS IN A DATA SPACE**

(71) Applicant: Siemens Aktiengesellschaft, 80333 München (DE)
(72) Inventor: Tintoiu, Anca Mihaela, 117630 Rucar (RO); Solca, Robert Nicolae, 500338 Brasov (RO); Benche, Mihaela Florina, 507190 Sanpetru (RO); Tatuc, Cosmina Stefania, 507075 Ghimbav (RO)
(74) Representative: Preda, Raluca-Laura

(57) **Abstract**

The invention relates to a computer-implemented method performed by a trust verification module (30) in a data space. The method comprises receiving (110), from a first participant (10), a registration request for registration to the data space; transmitting (120), to the first participant (10), a certificate request for requesting transmission of an identity certificate; receiving (130), from the first participant (10), the identity certificate; verifying (140), by utilizing a blockchain, whether the received identity certificate is valid; transmitting (150), to the first participant (10), a token for enabling data transfer between the first participant (10) and a second participant (20) if the identity certificate is valid.

## Description

The present invention relates to the field of secure communication within data spaces.

A data space refers to a network where users can securely exchange data. In this network, each actor or participant enters the data space through a connector that serves as both a provider and a consumer. To ensure the validation of identities and enable communication between participants, an identity provider is necessary.

Currently, a central identity provider is utilized for this purpose. However, this approach poses a higher risk of security breaches as the system may collapse due to compromise. The absence of a non-repudiation mechanism further exacerbates the situation, allowing attackers to infiltrate the network of a data space and carry out malicious activities. Consequently, customers may unknowingly consume counterfeit or unreliable data, potentially leading to security breaches.

It is an object of the present disclosure to provide a more secure trust verification between participants in a data space.

### Summary of the Invention

The present invention relates to a computer-implemented method performed by a trust verification module in a data space, wherein a first participant is verified. The method comprises the steps of a) receiving, from a first participant, a registration request for registration to the data space; b) transmitting, to the first participant, a certificate request for requesting transmission of an identity certificate; c) receiving, from the first participant, the identity certificate; d) verifying, by utilizing a blockchain, whether the received identity certificate is valid; e) transmitting, to the first participant, a token for enabling data transfer between the first participant and a second participant if the identity certificate is valid.

The trust verification module, the first participant and the second participant form part of a communication network that provides access to the data space. Before the first participant (and the second participant) may access the data space, however, they need to be verified. Therefore, the first participant must first obtain certification from the trust verification module which serves as an identity provider. The certification of identities is carried out by the trust verification module using a Blockchain technology which, due to the decentralized nature of the Blockchain, ensures a more secure authentication process for participants. The trust verification module operates as a distributed system, verifying the identity of participants based on the provided certificate. Scalability of the trust verification module is easily achievable due to the inherent characteristics of the Blockchain. The method according to the invention allows trust verification between participants in a data space in a decentralized manner by using a blockchain. That is, in contrast to the prior art, the trust verification module presents a decentralized approach for the identity provider. This module ensures the authentication of the client's identity in a decentralized manner, thereby safeguarding against unauthorized access from intruders and guaranteeing that only legitimate participants are granted entry into the data space. In the event of a system failure, the network may persistently operate as intended owing to the redundancy mechanisms given by the blockchain.

The data space allows for data exchange between the accessing participants. The data space may provide data integrity and sovereignty. In a data space, the primary objective is to facilitate the exchange of data among multiple participants, while ensuring enhanced integrity and control over the data. This distinguishes it from other environments, such as the Internet of Things (IoT), and consequently results in a higher volume of data traffic between different participants. One of the key challenges in securing such an environment, where multiple participants opt to share data, particularly sensitive information, lies in managing identities and authorizations. This involves determining who can access specific data, the methods through which they can access it, and the permissible uses based on predefined policies. By conducting trust verification in a decentralized environment according to the present invention, distinct from the dataspace infrastructure, the efficient utilization of resources is enabled and the infrastructure is allowed to prioritize data exchange.

In a first step of the method, the trust verification module receives, from the first participant, a registration request for registration to the data space. With the registration request, the first participant requests access to the data space. In a second step, the trust verification module transmits, to the first participant, a certificate request thereby requesting transmission of an identity certificate of the first participant. In a third step, the first participant provides the identity certificate to the trust verification module. The trust verification module then, in a fourth step, verifies whether the received identity certificate is valid by utilizing a blockchain. In other words, the trust verification module runs on the blockchain. In a fifth step, if it has been determined that the identity certificate is valid, the trust verification module transmits, to the first participant, a token for enabling data transfer between the first participant and a second participant so that the first participant may access the data space.

The trust verification module utilizes a blockchain means in particular that the trust verification module runs on the blockchain. In other words, the trust verification module has an identity provider functionality that is running on the blockchain, for example in the form of a smart contract. The blockchain is used as the environment for the trust verification module, i.e. for the certificate verification. This allows for a decentralized way of running the verification and thus increases the reliability of the verification. The identity certificate can be seen as a public key infrastructure certificate. That is, the first participant may provide a public key via the identity certificate while a private key creation may be separate from this process for security reasons. The trust verification module may verify whether the identity certificate is valid by facilitating the public and private key pair verification as is generally known. For example, the trust verification module may decrypt the identity certificate via the public key thus receiving a first hash value, calculate a second hash value of the same data and compare the two hash values.

The digital identity certificate may include an issuer, which is the entity responsible for creating the certificate or vouching for a specific identity, a digital signature, which contains a public key that enhances security by enabling cryptographic operations, and an identity, which encompasses information about the certification owner, whether an individual or an organization, including various identifiers such as name, business partner number (BPN), and network identifiers. The issuer, who generates the certificates, undergoes scrutiny by the trust verification module to determine if they are trusted to provide identities. The term "business partner number" refers to a unique identifier that facilitates tracking of partners in a manner that seamlessly integrates with legal and data environments. Network identifiers, on the other hand, pertain to IP addresses assigned to specific devices or network IP ranges that are exclusive to an entire business network. Furthermore, additional data, such as traditional PKI certificate data, can be incorporated as supplementary metadata.

According to an embodiment, the method further comprises the steps of: determining a certificate issuer of the received identity certificate; verifying, by utilizing the blockchain, whether the certificate issuer is listed in a trusted certificate authority list; transmitting, to the first participant, the token for enabling data transfer between the first participant and the second participant if the identity certificate is valid and if the certificate issuer is listed in the trusted certificate authority list. The certificate issuer may be determined based on the received identity certificate. According to this embodiment, a further verification-step is performed by the trust verification module running on the blockchain: It is determined whether the certificate issuer is listed in a trusted certificate authority list. The trusted certificate authority list may be stored on the blockchain. By verifying if the certificate issuer is in a trusted authority list, it can be determined if the identity can be trusted. This prevents attacks where a malicious actor is using self-signed certificates. Thus, security of the trust verification is further improved.

According to an embodiment, the method further comprises the steps of: determining the identity of the first participant from which the identity certificate is received; verifying, by utilizing the blockchain, whether the identity of the participant from the identity certificate is the same as the determined identity; transmitting, to the first participant, the token for enabling data transfer between the first participant and the second participant if the identity certificate is valid and if the identity of the participant from the identity certificate is the same as the determined identity. By explicitly verifying if the identity of the participant from the certificate is the same as the participant that sent the certificate, attacks may be prevented where a stolen certificate is used. Thus, security of the trust verification is further improved.

According to an embodiment, the method further comprises the steps of: verifying, by utilizing the blockchain, whether a signature of the received identity certificate is valid; transmitting, to the first participant, the token for enabling data transfer between the first participant and the second participant if the identity certificate is valid and if the signature of the received identity certificate is valid. By verifying the signature, it may be ensured that the certificate is containing legitimate data. Thus, security of the trust verification is further improved.

According to an embodiment, the method comprises all of the above verification steps. That is, the method may comprise verifying, by utilizing a blockchain, whether the received identity certificate is valid; verifying, by utilizing the blockchain, whether the certificate issuer is listed in a trusted certificate authority list; verifying, by utilizing the blockchain, whether the identity of the participant from the identity certificate is the same as the determined identity; and verifying, by utilizing the blockchain, whether a signature of the received identity certificate is valid. The token for enabling data transfer, i.e. the access to the data space, may preferably be sent only when all of the verification steps are successful. That is, according to an embodiment, the trust verification module transmits, to the first participant, the token for enabling data transfer between the first participant and the second participant only if all of the following conditions are fulfilled: the identity certificate is valid, the certificate issuer is listed in the trusted certificate authority list, the identity of the participant from the identity certificate is the same as the determined identity, and the signature of the received identity certificate is valid. Thus, security of the trust verification is further improved.

According to an embodiment, the above-explained verification steps are performed as a smart contract on the blockchain. A smart contract is a digital contract stored on a blockchain that is automatically executed when predetermined terms and conditions are met. They may be used to automate the execution of an agreement so that all participants can be immediately certain of the outcome, without any intermediary's involvement or time loss. The smart contract may work by following if-then-statements that are written into code on a blockchain. For example, the above-explained verification steps may be put into code via the following algorithm:

```
       verify_identity(participant, trusted certificate_authority_list):
        certificate := get_certificate(participant)
        if not is_valid(certificate):
               return False
        if certificate.issuer not in trusted_certificate authority_list:
               return False
        if certificate.identity not participant:
               return False
        if not verify_signature(certificate):
               return False
        return True.
```

The present invention also relates, in an embodiment, to a computer-implemented method performed by a trust verification module in a data space, wherein a second participant is verified. The method comprises the steps of receiving, from the second participant, a registration request for registration to the data space; transmitting, to the second participant, a certificate request for requesting transmission of an identity certificate; receiving, from the second participant, the identity certificate; verifying, by utilizing a blockchain, whether the received identity certificate is valid; transmitting, to the second participant, a token for enabling data transfer between the second participant and the first participant if the identity certificate is valid. Thus, the second participant may be verified in the same manner as the first participant which further increases the security.

The present invention also relates to a computer-implemented method performed by a first participant and/or a second participant in a data space. The method comprises: transmitting, to a trust verification module, a registration request for registration to the data space; receiving, from the trust verification module, a certificate request for requesting transmission of an identity certificate; transmitting, to the trust verification module, the identity certificate; receiving, from the trust verification module, a token for enabling data transfer between the first participant and the second participant if the trust verification module has verified the identity certificate as valid by utilizing a blockchain. The above explanations and embodiments apply.

The invention also pertains to a data processing apparatus comprising a processor configured to perform the steps of the method according to the invention, i.e. one or more of the above-explained methods. The data processing apparatus may be a computer.

The invention also pertains to a computer program product comprising instructions which, when the program is executed by a data processing apparatus, cause the data processing apparatus to carry out the steps of the method according to the invention, i.e. one or more of the above-explained methods. The data processing apparatus may be a computer.

The invention also pertains to a computer-readable storage medium comprising instructions which, when executed by a data processing apparatus, cause the data processing apparatus to carry out the steps of the method according to the invention, i.e. of one or more of the above-explained methods. The data processing apparatus may be a computer.

### Brief Description of Figures

- Fig. 1: shows a schematic of the entities interacting in the present invention.
- Fig. 2: illustrates the method according to the present invention.

### Detailed Description

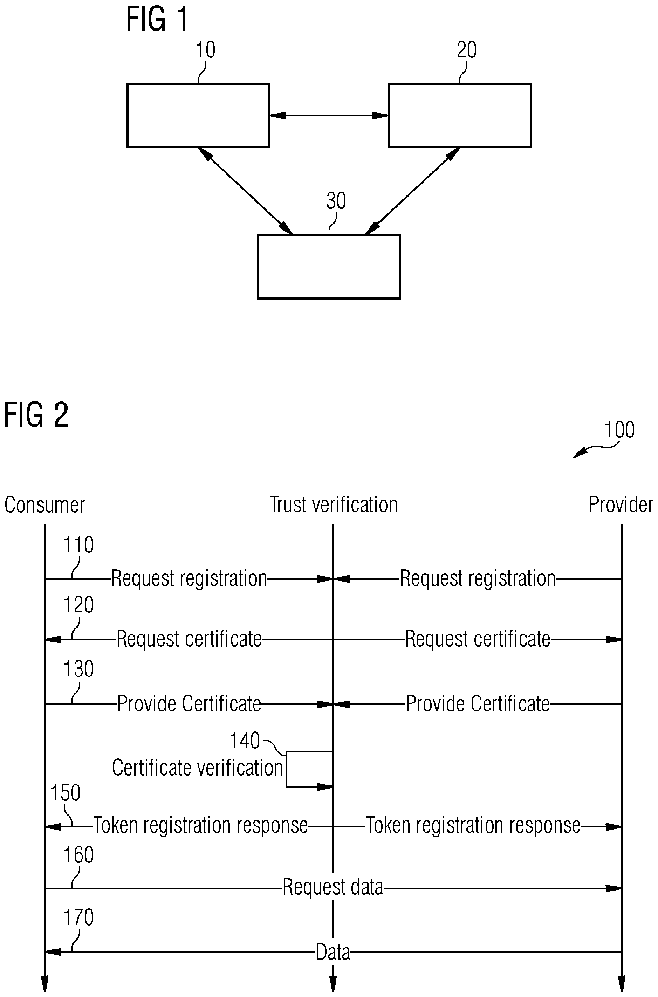

Fig. 1 illustrates a first participant 10, a second participant 20 and a trust verification module 30 which form part of a communication network. The first participant 10 and the second participant 20 may access a data space and exchange information after being verified by the trust verification module 30. The trust verification module 30, according to the invention, forms an identity provider running on a blockchain.

Fig. 2 illustrates a method 100 according to the present invention, wherein the first participant 10 is a data consumer and the second participant 20 a data provider.

The primary function of the provider is to transmit proprietary data to the consumer. To facilitate the transmission of requested data to the consumer, the provider must obtain certification from an identity provider. The consumer has the ability to request data from a specific provider, but in order to do so, the consumer must also be certified by the trust verification module serving as an identity provider. The blockchain serves as a decentralized solution for the trust verification module, providing a more secure authentication method for participants. The trust verification module, which operates as a distributed system, validates the identity of participants through the use of certificates. Due to the inherent characteristics of Blockchain technology, the trust verification module can be easily scaled.

In particular, in a first step 110 of the method, the trust verification module receives, from both the consumer and the provider, a registration request for registration to the data space.

In a second step 120 of the method, the trust verification module transmits, to both the consumer and the provider, a certificate request for requesting transmission of an identity certificate.

In a third step 130 of the method, the trust verification module receives, from both the consumer and the provider, the respective identity certificate.

In a fourth step 140 of the method, the trust verification module verifies the received identity certificates. That is, the trust verification module, by utilizing the blockchain, determines whether the received identity certificate is valid. In other words, the trust verification module runs on the blockchain. The trust verification module thus verifies, in a decentralized manner, whether the received identity certificate is valid.

The trust verification module may perform further verification steps. That is, the method may further comprise verifying, by utilizing the blockchain, whether the certificate issuer is listed in a trusted certificate authority list; verifying, by utilizing the blockchain, whether the identity of the provide/consumer from the identity certificate is the same as the determined identity; and verifying, by utilizing the blockchain, whether the signatures of the received identity certificates are valid.

In a fifth step 150 of the method, if the previous verification steps are successful, the trust verification module transmits, to the first and second participant, a token as a registration response thereby confirming registration to the data space and thus enabling data transfer between the first participant and the second participant.

In a sixth step 160, the consumer may then request data from the provider and, in a seventh step 170, the provider may provide said data.

The method according to the invention allows trust verification between participants in a data space in a decentralized manner by using a blockchain. That is, in contrast to the prior art, the trust verification module presents a decentralized approach for the identity provider. This module ensures the authentication of the client's identity in a decentralized manner, thereby safeguarding against unauthorized access from intruders and guaranteeing that only legitimate participants are granted entry into the data space. In the event of a system failure, the network may persistently operate as intended owing to the redundancy mechanisms given by the blockchain.

With the invention, the transmission of owned data from a data provider to a data consumer is facilitated through a certification process. In order for the provider to send the requested data to the data consumer, it must first obtain certification from an identity provider. Similarly, the data consumer must also be certified by an identity provider in order to request data from the data provider. The certification of identities is carried out using a blockchain technology by the identity provider. To ensure a more secure authentication process for participants, the trust verification module utilizes the decentralized nature of blockchain. This module operates as a distributed system, verifying the identity of participants based on the provided certificate. The scalability of this trust verification module is easily achievable due to the inherent characteristics of blockchain.

Use cases of the present invention are explained in the following:
In a first example of a use case, the method according to the invention may be used for authentication and authorization for supply chain management in the automotive industry. In the event that an automotive business necessitates particular hardware elements, such as a gearbox, or software elements, such as firmware, they can opt to outsource this task to specialized business associates. This is accomplished by transmitting schematics or requirements through a designated data space. To ensure a secure transmission, allowing only authorized users to access the data, both the automotive enterprise and the partners' staff may engage in authentication utilizing the trust verification according to the invention. Following the authentication process, the two parties can proceed with sharing data.

In a second example of a use case, the method according to the invention may be used for authentication and authorization for inventory and stock management in healthcare industry. Within the healthcare sector, partners like hospitals and pharmaceutical companies can leverage data spaces to monitor their inventory levels efficiently. In cases where medical supplies are running low, hospitals must engage with manufacturers to place new orders. This process involves sharing sensitive data, such as the stock levels of particular drugs. To facilitate secure data exchange, partners may authenticate themselves using the trust verification according to the invention, ensuring that only authorized parties can access and request this type of information.

In a third example of a use case, the method according to the invention may be used for patient data sharing in healthcare. Patient information, such as medical history, treatment plans, and test results, can be stored by healthcare organizations using data spaces. Given the sensitive nature of this data, robust security measures are essential to protect it. The solution according to the invention allows healthcare partners to facilitate access to this information for both patients and medical professionals while maintaining privacy and preventing unauthorized access.

Independent of the grammatical term usage, individuals with male, female or other gender identities are included within the term.

### Bezugszeichenliste / List of Reference

- 10: first participant
- 20: second participant
- 30: trust verification module
- 100: method
- 110: first step
- 120: second step
- 130: third step
- 140: fourth step
- 150: fifth step
- 160: sixth step
- 170: seventh step

## Claims

1. Computer-implemented method performed by a trust verification module (30) in a data space, wherein the method comprises:
- receiving (110), from a first participant (10), a registration request for registration to the data space;
- transmitting (120), to the first participant (10), a certificate request for requesting transmission of an identity certificate;
- receiving (130), from the first participant (10), the identity certificate;
- verifying (140), by utilizing a blockchain, whether the received identity certificate is valid;
- transmitting (150), to the first participant (10), a token for enabling data transfer between the first participant (10) and a second participant (20) if the identity certificate is valid.

2. Method of claim 1, wherein the method further comprises:
- determining a certificate issuer of the received identity certificate;
- verifying, by utilizing the blockchain, whether the certificate issuer is listed in a trusted certificate authority list;
- transmitting, to the first participant (10), the token for enabling data transfer between the first participant (10) and the second participant (20) if the identity certificate is valid and if the certificate issuer is listed in the trusted certificate authority list.

3. Method of claim 1 or 2, wherein the method further comprises:
- determining the identity of the first participant (10) from which the identity certificate is received;
- verifying, by utilizing the blockchain, whether the identity of the participant from the identity certificate is the same as the determined identity;
- transmitting, to the first participant (10), the token for enabling data transfer between the first participant (10) and the second participant (20) if the identity certificate is valid and if the identity of the participant from the identity certificate is the same as the determined identity.

4. Method of any of the preceding claims, wherein the method further comprises:
- verifying, by utilizing the blockchain, whether a signature of the received identity certificate is valid;
- transmitting, to the first participant (10), the token for enabling data transfer between the first participant (10) and the second participant (20) if the identity certificate is valid and if the signature of the received identity certificate is valid.

5. Method of any of the preceding claims, wherein the verification-steps are performed as a smart contract on the blockchain.

6. Method of any of the preceding claims, wherein the method comprises:
- receiving (110), from the second participant (20), a registration request for registration to the data space;
- transmitting (130), to the second participant (20), a certificate request for requesting transmission of an identity certificate;
- receiving (140), from the second participant (20), the identity certificate;
- verifying (150), by utilizing a blockchain, whether the received identity certificate is valid;
- transmitting (150), to the second participant (20), a token for enabling data transfer between the second participant (20) and the first participant (10) if the identity certificate is valid.

7. Computer-implemented method performed by a first participant (10) and/or a second participant (20) in a data space, wherein the method comprises:
- transmitting (110), to a trust verification module (30), a registration request for registration to the data space;
- receiving (120), from the trust verification module (30), a certificate request for requesting transmission of an identity certificate;
- transmitting (130), to the trust verification module (30), the identity certificate;
- receiving (150), from the trust verification module (30), a token for enabling data transfer between the first participant (10) and the second participant (20) if the trust verification module (30) has verified the identity certificate as valid by utilizing a blockchain.

8. Method of any of the preceding claims, wherein the first participant (10) is a data consumer and the second participant (20) is a data provider or wherein the second participant (20) is a data consumer and the first participant (10) is a data provider.

9. A data processing apparatus comprising a processor configured to perform the steps of the method of any one of the preceding claims.

10. A computer program product comprising instructions which, when the program is executed by a computer, cause the computer to carry out the steps of the method of any one of claims 1 to 8.

11. A computer-readable storage medium comprising instructions which, when executed by a computer, cause the computer to carry out the steps of the method of any one of claims 1 to 8.
